# EUROPEAN PATENT SPECIFICATION

(11) **EP 2 440 096 B1**
(45) Date of publication and mention of the grant of the patent: **08.05.2013**
(21) Application number: 10724496.4
(22) Date of filing: 07.06.2010
(51) Int. Cl.: A47J 45/06

(54) **PAN WITH AN INVERTED CURVED HANDLE**
PFANNE MIT INVERTIERTEM GEKRÜMMTEN GRIFF
POÊLE À MANCHE COURBÉ INVERSÉ

(30) Priority: 08.06.2009 IT MI20090187 U
(43) Date of publication of application: 18.04.2012
(73) Proprietor: SANMIRO S.R.L., 23861 Cesana Brianza (LC) (IT)
(72) Inventor: FULIGNO, Daniele, 61122 Pesaro (PU) (IT)
(74) Representative: Mittler, Enrico
(86) International application number: PCT/EP2010/057913
(87) International publication number: WO 2010/142636

(56) References cited:
- DE-U1- 9 003 593
- DE-U1- 29 519 981
- GB-A- 855 808
- NL-C1- 1 033 355

## Description

The present invention relates to a pan with an inverted curved handle.

The problem concerning the proper design of hand tools is timelier than ever before and plays a key role in attaining satisfactory performance in terms of safety and efficacy of use in a variety of applications. It is estimated that in the United States, about one tenth of workplace accidents in the industrial sphere are connected to the use of hand tools. Among these, the upper limbs are the most affected body part (59% of cases as regards electric, hydraulic or pneumatic tools, and 51 % of the remaining injuries) and among them more than half involve fingers.

The excess strains concentrated in the upper extremities induced by hand tools and their consequences on users are particularly studied.

Pan means a shallow metal tool suited to cook food that is with a very wide cooking surface with respect to its height.

A pan so defined differs from a pot which in contrast has a structure with more capacity, that is, it is deeper.

Typically pans have a large cooking surface to distribute the food to be cooked well; it is therefore suitable, for example, for cooking steaks and not for roasts or soups.

Pans are handled by means of a single elongated handle. In contrast pots have a pair of short handles because the greater weight would prevent them from being lifted with just one hand.

Pan handles are elongated to enable a better grip by the user. On the other hand, disadvantageously, the farther grasp from the pan leads to an increase in the moment of force needed.

Curved handles with a convexity towards the cooking surface are already known. However, the curvature of these handles is reduced so as not to make it difficult to grasp. JP-2008119438 shows a curved handle for a pot, not a pan, with a complex curved structure to support a substantially horizontal grip involving significant structural stresses on the fastening points to the pan.

NL-C-1033355 discloses a pan with curved handle with a continuous curvative without changes in the concavity. DE-U-9003593 discloses a pan with a curved handle with a free end which ands before invading the space above the cooking surface. The object of this invention is to create a pan with a single handle that is easy to grasp, not particularly bulky and able to reduce the effort needed to lift the pan by the user.

In accordance with the invention this object is achieved with a pan as disclosed in claim 1.

These and other features of this invention will become more apparent from the following detailed disclosure of a practical embodiment thereof, illustrated merely by way of non-limitative example in the attached drawings, in which:
Figure 1 shows a perspective view of a pan with a handle according to the present invention;
Figure 2 shows a side view of the pan;
Figure 3 shows a side view of the handle;
Figure 4 shows a perspective view of the handle;
Figure 5 shows a top plan view of the handle;
Figure 6 shows a left view of Figure 3;
Figure 7 shows a right view of Figure 3;
Figure 8 shows a bottom plan view of the handle;
Figure 9 shows a side view of the pan with the handle grasped according to this invention;
Figure 10 shows a side view of the pan with the known handle grasped;
Figure 11 shows a side view of the pan with the known handle and the handle according to this invention overlapping;
Figure 12 shows a side view of the pan with the known handle with a simulation arm;
Figure 13 shows a side view of the pan with the handle according to this invention with a simulation arm;
Figure 14 corresponds to Figure 12 with illustrative heights;
Figure 15 corresponds to Figure 13 with illustrative heights;
Figure 16 shows a table with comparative data of the stress exerted by a user;
Figure 17 shows a side view of a model of a handle according to the invention to be subjected to a FEM test;
Figure 18 shows a side view of a model of a known handle to be subjected to a FEM test; and
Figure 19 shows a table with comparative data of the Von Mises stresses collected during the FEM test.

A pan 1 has a curved handle 2 with a continuous curvature and a concavity towards the cooking surface 3 of the pan.

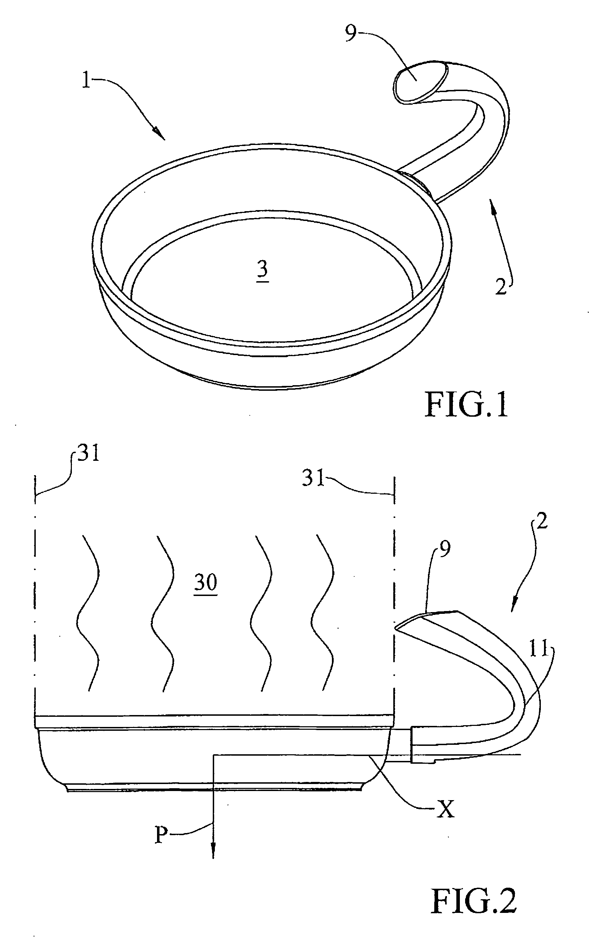

The handle 2 comprises a first section 4 fastened to the pan 1 at one end 5 with a fastening 6 which extends outward from the pan 1 and a second section 7 continuously connected to said first section 4 with a free end 8 which extends inwards approaching the pan 1 until reaching but without invading the projection space 30 above the cooking surface 3 schematically comprised between the lines 31 in Figure 2. The free end 8 is at a higher height than the fastened end 6.

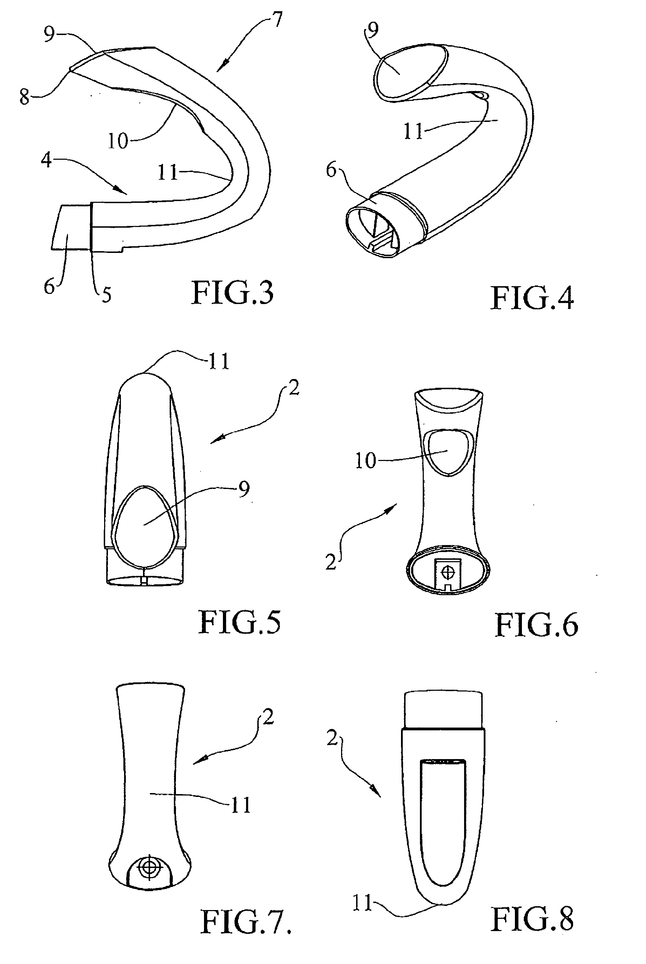

As can be seen particularly from Figures 2 and 3, the handle 2 is substantially "C" shaped.

The second section 7 is intended to be grasped by the user and has a flat portion 9 intended as a thumb support at the free end 8 and a further concavity 10 on the lower side for the remaining fingers.

The handle 2 according to this invention is usable only and exclusively on pans, because pots are too heavy.

In addition, given that pans are shallow, the point of application of the force on the handle (zone 11) is substantially on the same line of the centre of gravity B of the pan (the first section 4 is slightly curved, almost straight). Conversely, pots have a centre of gravity of variable height depending on the load of the cooking surface that can vary significantly.

To lift a pan or a pot with a single handle, a vertical force P equal to and opposing the weight of the object and a moment of force equal to the force P multiplied by the arm X (Figure 2) must be applied.

The second section 7 of the handle 2, i.e. the grip itself, is sized to be fully enclosed by the user's hand: it is essential that the thumb lays on the flat portion 9 and that the position of the little finger substantially coincides with zone 11 of the handle 2 where the handle bends.

Advantageously, the particular tight curve of the handle 2 enables the pan 1 to hang on bars or similar very easily.

In addition, the horizontal space it occupies is reduced in comparison with a pan equipped with a substantially straight handle.

The effort exerted by the user is reduced compared to a straight handle because the moment of force is smaller (arm X is shorter).

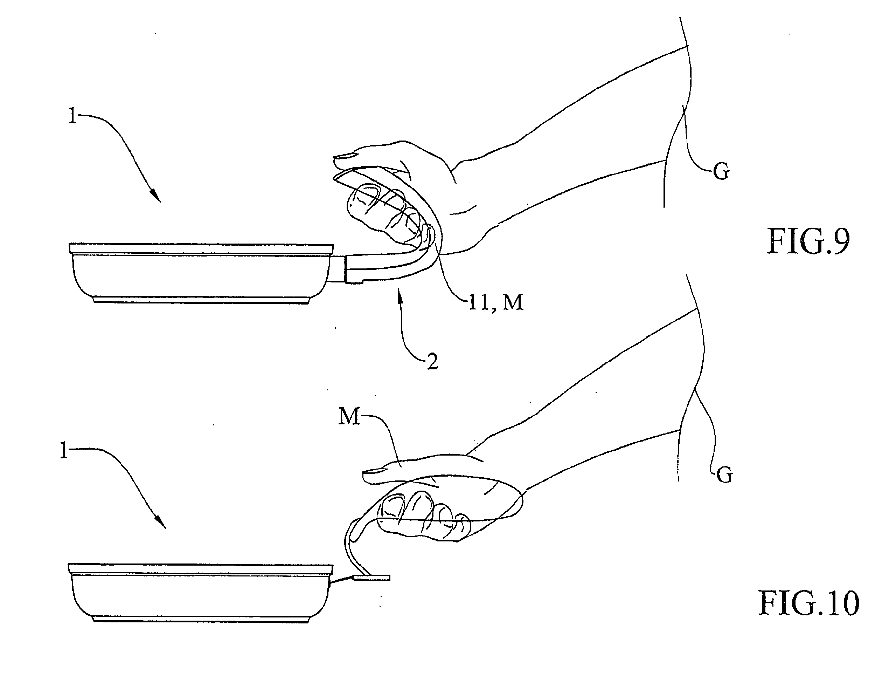

With respect to a handle with an inverted curve shape with respect to this invention, as shown in JP-2008119438, that is, with the same arm X and weight P, the effort needed is still less because it lies on a side of the hand closer to the wrist, that is, after the little finger instead of above the index finger. In this case, to lift the pan the user especially uses the forearm instead of the wrist which is known to be weaker and more delicate than the forearm (Figures 9-10). This consideration will be clearer later where the importance of the grasp angle 200 of the wrist will be discussed.

In addition, the distance between the elbow (point G) and point M of application of the force, or zone 11, is smaller for a pan with a handle according to this invention with respect to the handle type described in JP-2008119438 (see comparatively Figures 9 and 10).

It is therefore demonstrated that this invention enables a lesser lifting effort.

Advantageously also compared to the solution proposed by the Japanese patent, the concavity towards the cooking surface allows a much simpler structure of the handle 2; in the main figure of JP-2008119438, there is a complex geometry of the handle because in any case there must be a first fastening section directed outwards.

To reduce the risk of burns, already low since the free end 8 does not go over the cooking surface, it is possible to apply an essentially vertical protection shield to the free end 8.

With specific reference to a test report from the Department of Mechanical Engineering of the Polytechnic University of Milan (document P.75/2009, "Mechanical and ergonomic assessment of an innovative handle for pans") requested by the Applicant, to better understand the advantages arising from the solution claimed here, it should be noted that there are two aspects that are particularly critical in the design of hand tools: the angle of the elbow and the wrist of the end user.

As regards the angle of the elbow, extended work with the arm in a semi-outstretched position can lead to pain, loss of strength and sensitivity. In activities requiring force, an opening of 90° between arm and forearm is indicated as optimal and redesigning not only the tool but the entire work environment is suggested in order to achieve this condition.

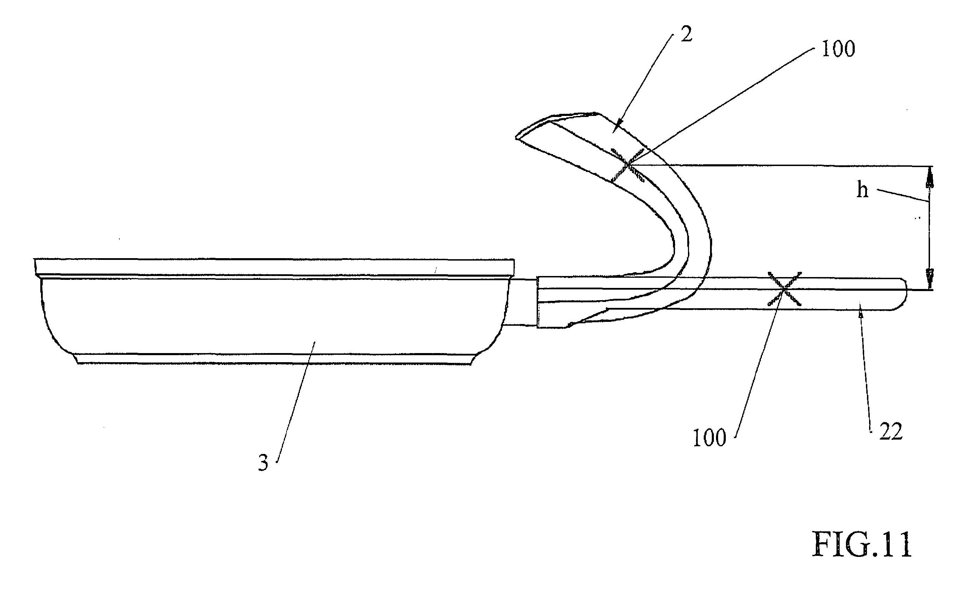

The innovative handle according to this invention, compared with a substantially straight conventional handle 22, shows a gripping or grasping point 100 higher by a distance h (Figure 11). This is reflected, in the typical environment of a kitchen, in the possibility for the user to work with the elbow in a more closed position with respect to a standard product 22.

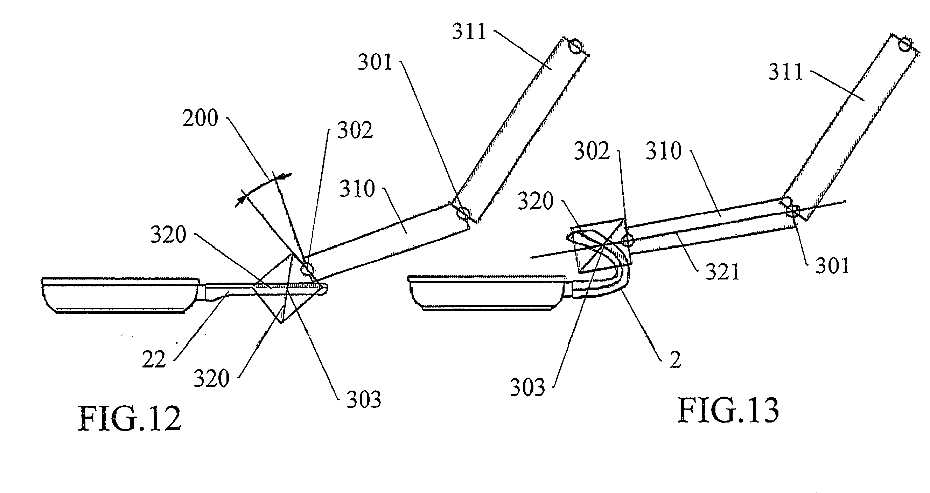

The most interesting aspect, however, is the effect of the new handle on the grasping angle 200 (Figures 12-13): working extensively with the wrist at an angled position with respect to the neutral position (merely by way of example Figure 12 shows an angle 200 of approximately 21°) leads to joint fatigue with consequent loss of sensitivity, strength (and hence loss of grip) and, over time, the onset of WRMSD (Work-Related Musculoskeletal Disorders). It was estimated that the innovative curved handle 2 here claimed is able to reduce the opening of the wrist by about 20°, returning it to its natural position (compare Figures 12 and 13). This estimate was conducted using the geometric model of the upper limb shown in Figures 12 and 13, built based on the anthropometric measurements of Chandle et al., "Investigation of Inertial Properties of the Human Body", AMRL TR 74-137 Wright-Patterson Air Force base, Ohio, 1975.

The angle of the wrist was estimated by rotating the hand with respect to the forearm 310 until reaching the tangent between one of its main diagonals 320 and the axis of the grip 321 at the grasping point 100. The same inclination could also be obtained with a curved handle featuring an inverted convexity toward the cooking surface 3, but this solution would lead to a significant increase in the overall dimensions, that is, moving the grip 100 away from the centre of gravity of the pan thereby extending the arm of the torque involved.

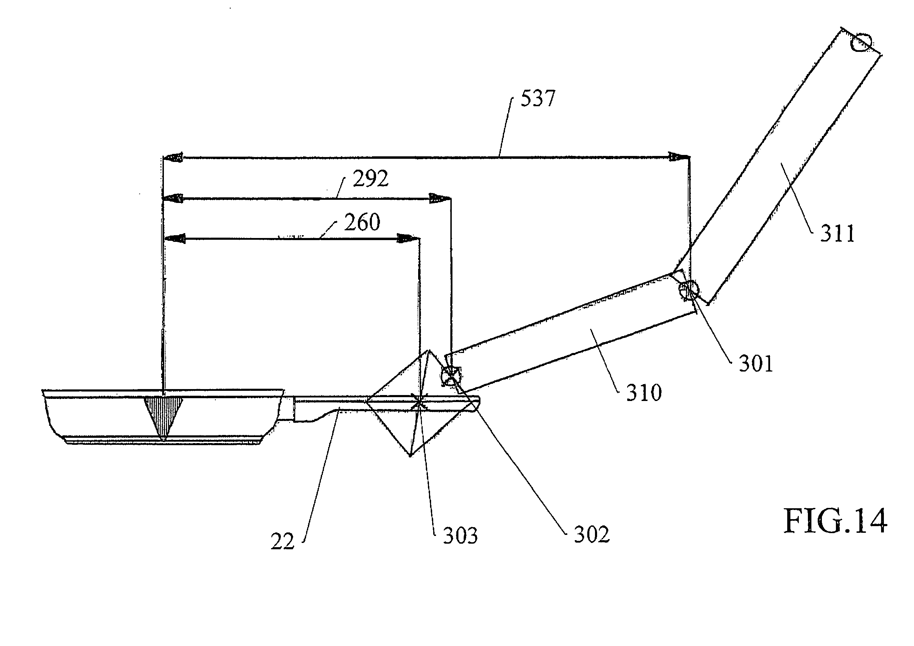

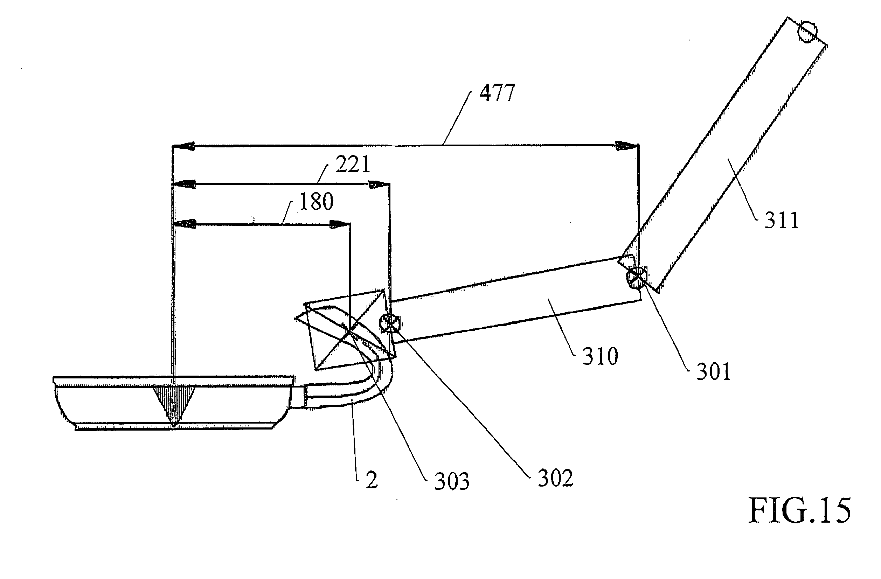

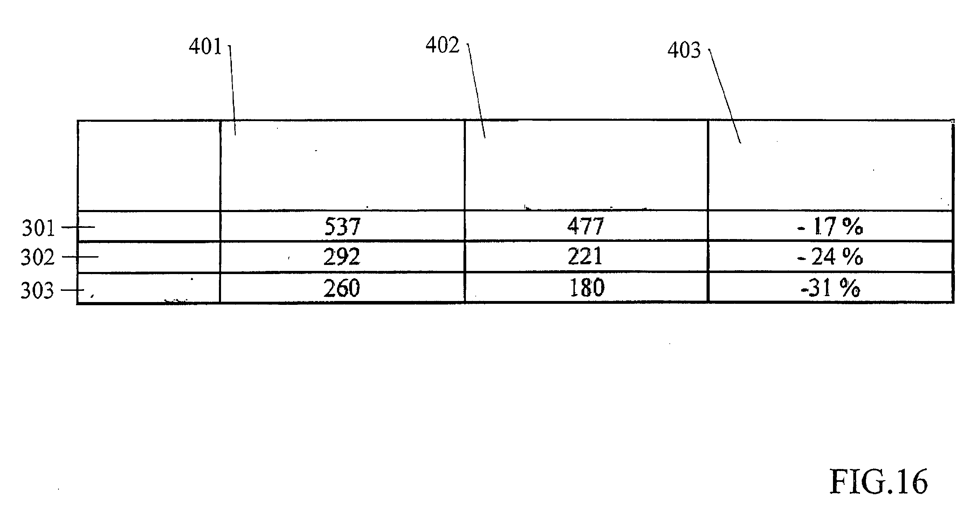

With reference to figures 14 and 15, the weight force concentrated at the centre of the pan can be reasonably assumed keeping the same model of the human arm described above. For the purposes of comparison between the torques discharged by a classic handle 22 and the new curved handle 2, a forcing unit (1N) is assumed, that is, in other words, the result of the load is normalized, thus obtaining a moment for forcing unit [(N*mm/N)]. This operation does not alter the general analysis, simply the torque resulting from a forcing of x Newtons will be x times the torque resulting from I Newton. It is possible to estimate the resulting moments 401 (known handle Figure 14) and 402 (innovative handle Figure 15) on the elbow 301, wrist 302 and hand 303 directly from the height in mm shown in Figures 14 and 15. The results are summarized in the table of Figure 16.

A clear decrease in percentage 403 of the torques discharged on the three points considered 301-303 is shown. Obviously the magnitude of this reduction depends on the point under consideration, but it can be concluded that the reduction of effort is far from negligible.

In addition, the geometry of the variable curvature of the handle 2 allows the user to adapt the grip to his/her needs.

This grip is also able to distribute the loads acting along the contact area more evenly compared to a known handle 22, thereby reducing a typical problem of hand tools: the creation of localized excess strains, especially on the index finger.

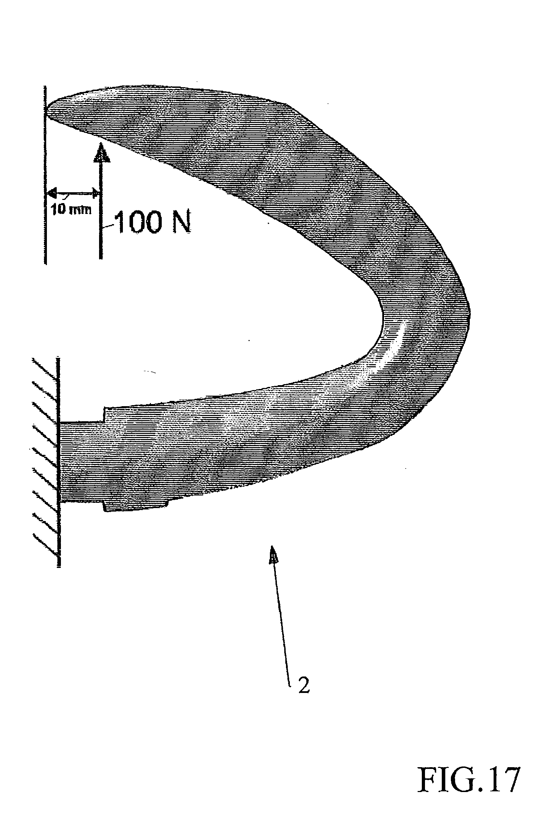

The evaluation of the mechanical behaviour of the handle was conducted by means of a comparison between the new handle 2 and a known handle 25 already manufactured by the Applicant (Figures 17-18). The analysis is based on a FEM simulation of the static load test described in standard EN12983:2000/A1. According to this standard the mechanical strength should be tested after subjecting said handle to a thermal cycle. Since the thermal cycle changes the characteristics of the material, the nominal data of the mechanical strength of the material cannot be assumed for the numerical simulation. It was therefore decided to proceed with a comparative analysis, that is, simulating with a finite elements model the static test of said standard on a conventional handle 25 and on the new curved handle 2. Since the analysis is a comparison between the two shapes, the choice of the material used in the simulation is not significant. The software used for the testing was Abacus 6.5.

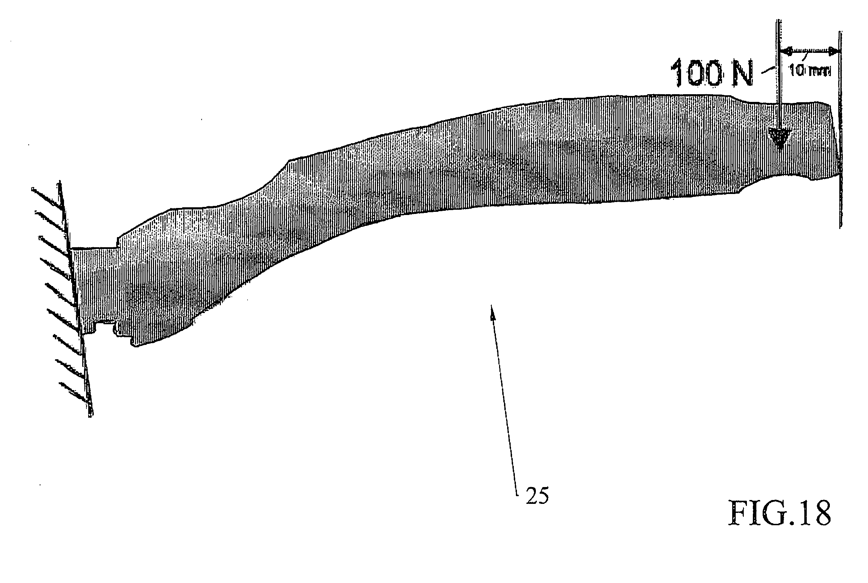

First of all a CAD model of the two handles was imported into the calculation environment. Subsequently load conditions and constraints were imposed. On the static load test, the standard requires to fasten one end of the handle with a joint and then apply a vertical force of 100N at a point 10 mm from the free end. Figures 17 and 18 show the layout of the constraints and the forces used in the simulation for both types of handles.

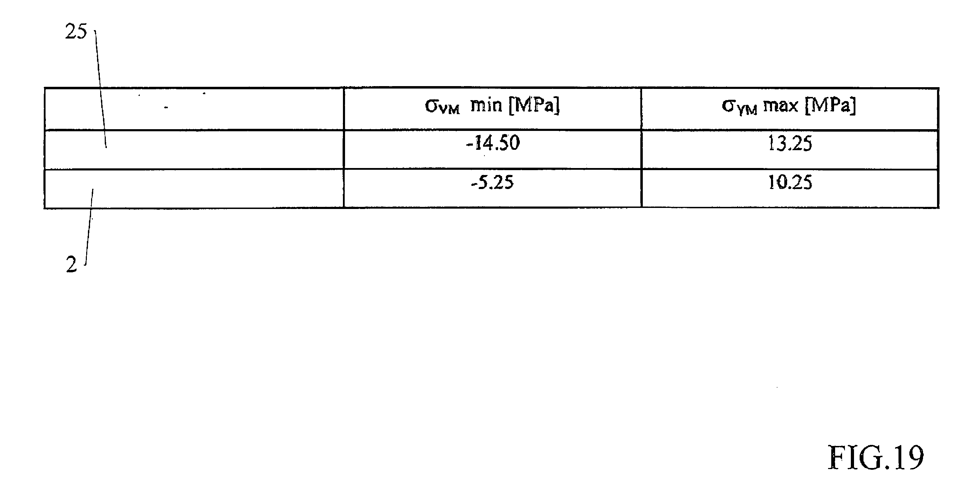

Figure 19 provides a summary table of the results with the Von Mises maximum stress value σvm on the two handles 2 and 25. Positive values correspond to the fibres subjected to tensile forces while negative values correspond to fibres subjected to compression forces. The fibres are subjected to tensile forces on the upper surface of the known handle 25 and on the inner surface of the new handle 2. In contrast the fibres are compressed on the lower surface of handle 25 and on the outer surface of handle 2.

The results show that the new handle 2 has lower effort values both in the areas subjected to traction, and in those subjected to compression.

## Claims

1. A pan (1) with curved handle (2) having a free end (8), the curvature of the handle (2) being continuous without changes in the concavity which faces the cooking surface (3), the free end (8) being at height (h) with respect to a horizontal supporting plane of the pan (1) higher than the height of the fastened end (6) of the handle (2), said handle (2) starting from the fastened end (5, 6) of the pan (1) with a first section (4) that extends outward with respect to the centre of gravity of the pan (1), connected to a second section (7) for grasping which extends inward above said first section (4),
**characterized in that**
the free end (8) ends before invading the space (30, 31) above the cooking surface (3) so that the gripping point (100) is within the distance between the connecting area (11) between said sections (4, 7) and the edge (31) of the pan (1) at a distance from the edge (31) of the cooking surface (3) equal to half the distance from the connecting area (11) between said sections (4, 7) and the edge (31) of the pan (1), the second section (7) being inclined with respect to a horizontal line in such a way that the angle of grip (200) between forearm (310) and hand (303) is substantially equal to 0°, and with respect to a horizontal line in such a way that the angle between the arm (311) and forearm (310) is equal to about 90°.

2. Pan (1) according to claim 1, **characterized in that** said second section (7) is sized to be fully enclosed by the user's hand, the thumb laying on a flat portion (9) and the position of the little finger substantially coinciding with a zone (11) of the handle (2) where the handle bends.

## Patentansprüche

1. Pfanne (1) mit gekrümmtem Griff (2), welcher ein freies Ende (8) aufweist, wobei die Krümmung des Griffs (2) kontinuierlich, ohne Veränderungen der zur Kochfläche (3) weisenden Konkavität, erfolgt, wobei das freie Ende (8) sich auf einer Höhe (h) bezüglich einer horizontalen Auflageebene der Pfanne (1) befindet, die höher als die Stärke des befestigten Endes (6) des Griffs (2) ist, wobei dieser Griff (2) am befestigten Ende (5, 6) der Pfanne (1) mit einem ersten Abschnitt (4) anfängt, der sich im Bezug auf den Schwerpunkt der Pfanne (1) nach außen erstreckt, und der mit einem zweiten Abschnitt (7) zum Greifen verbunden ist, welcher sich über den ersten Abschnitt (4) nach innen erstreckt, **dadurch gekennzeichnet,**
**dass** das freie Ende (8) vor dem Eindringen in den Raum (30, 31) oberhalb der Kochfläche endet, so dass sich der Griffpunkt (100) innerhalb der Strecke zwischen dem Verbindungsbereich (11) zwischen den Abschnitten (4, 7) und der Kante (31) der Pfanne (1) in einem Abstand zu der Kante (31) der Kochfläche (3) befindet, der gleich der Hälfte des Abstandes des Verbindungsbereichs (11) zwischen den Abschnitten (4, 7) und der Kante (31) der Pfanne (1) ist, wobei der zweite Bereich (7) in Bezug auf eine horizontale Linie in der Weise geneigt ist, dass der Griffwinkel (200) zwischen Unterarm (310) und Hand (303) im Wesentlichen gleich 0° ist und in der Weise, dass der Winkel zwischen dem Arm (311) und dem Unterarm (310) in Bezug auf eine horizontale Linie ungefähr gleich 90° ist.

2. Pfanne (1) nach Anspruch 1, **dadurch gekennzeichnet, dass** der zweite Bereich (7) so dimensioniert ist, dass dieser vollständig von der Hand des Anwenders umschließbar ist, wobei der Daumen auf einem flachen Bereich (9) liegt und die Position des kleinen Fingers im wesentlichen mit einer Zone (11) des Griffs (2) übereinstimmt, wo sich der Griff biegt.

## Revendications

1. Poêle (1) avec un manche incurvé (2) ayant une extrémité libre (8), la courbure du manche (2) étant continue sans changements dans la concavité qui fait face à la surface de cuisson (3), l'extrémité libre (8) étant à une hauteur (h) par rapport à un plan de support horizontal de la poêle (1) supérieure à la hauteur de l'extrémité fixée (6) du manche (2), ledit manche (2) commençant à partir d e l'extrémité fixée (5, 6) de la poêle (1) avec une première section (4) qui s'étend vers l'extérieur par rapport au centre de gravité de la poêle (1), raccordé à une seconde section (7) de préhension qui s'étend vers l'intérieur au-dessus de ladite première section (4),
**caractérisée en ce que**
la première extrémité (8) se termine avant d'envahir l'espace (30, 31) situé au-dessus de la surface de cuisson (3) de sorte que le point de préhension (100) est dans les limites de la distance située entre la zone de raccordement (11) entre lesdites sections (4, 7) et le bord (31) de la poêle (1) à une certaine distance du bord (31) de la surface de cuisson (3) égale à la moitié de la distance allant de la zone de raccordement (11) entre lesdites sections (4, 7) et le bord (31) de la poêle (1), la seconde section (7) étant inclinée par rapport à une ligne horizontale de sorte que l'angle de préhension (200) entre l'avant-bras (310) et la main (303) est sensiblement égal à 0°, et par rapport à une ligne horizontale de sorte que l'angle entre le bras (311) et l'avant-bras (310) est égal à environ 90°.

2. Poêle (1) selon la revendication 1, **caractérisée en ce que** ladite seconde section (7) est dimensionnée pour être complètement enfermée par la main de l'utilisateur, le pouce se trouvant sur une partie plate (9) et la position du petit doigt coïncidant sensiblement avec une zone (11) du manche (2) où le manche se courbe.
